Europäisches Patentamt

European Patent Office

Office européen des brevets

(11) Veröffentlichungsnummer: **0 332 749**
**A2**

## (12) EUROPÄISCHE PATENTANMELDUNG

(21) Anmeldenummer: 88118895.7

(22) Anmeldetag: 12.11.88

(51) Int. Cl.⁴: **H01K 1/52** , **G01N 21/35**

(30) Priorität: 18.03.88 DE 3809160

(43) Veröffentlichungstag der Anmeldung:
20.09.89 Patentblatt 89/38

(84) Benannte Vertragsstaaten:
DE FR GB IT

(71) Anmelder: **LEYBOLD AKTIENGESELLSCHAFT**
**Wilhelm-Rohn-Strasse 25**
**D-6450 Hanau 1(DE)**

(72) Erfinder: **Modlinski, Ulrich**
**Goldbergstrasse 11**
**D-8755 Alzenau-Albstadt(DE)**
Erfinder: **Wiegleb, Gerhard**
**Dorfstrasse 3**
**D-8752 Geiselbach(DE)**

(54) Infrarot-Strahlungsquelle, insbesondere für ein mehrkanaliges Gasanalysegerät.

(57) Bei einer Infrarot-Strahlungsquelle, insbesondere für ein mehrkanaliges Gasanalysegerät ist ein Strahlungskörper (3) mit einem hinter diesem angeordneten Reflektor (4) und einer den Strahlungskörper (3) zumindest teilweise abdeckenden Scheibe (5) aus Calcium-Fluorit vorgesehen, wobei der Strahlungskörper (3) von seiner Rückseite her von einem schalenartigen Gehäuse (6) teilweise umschlossen ist, dessen umlaufende Kante mit der Scheibe (5) über einen Zwischenring (19) druckfest verbunden ist. Der Innenraum (7) der Strahlungsquelle kann über einen Kanal (8) eines vom Gehäuse (6) gebildeten Rohrstutzens (9) luftleer gepumpt bzw. mit einer oxidierenden Atmosphäre versehen werden, wodurch eine hohe Lageunempfindlichkeit der Infrarot-Strahlungsquelle erzielbar ist.

EP 0 332 749 A2

## Infrarot-Strahlungsquelle, insbesondere für ein mehrkanaliges Gasanalysegerät

Die Erfindung betrifft eine Infrarot-Strahlungsquelle, insbesondere für ein mehrkanaliges Gasanalysegerät, mit einem Strahlungskörper, einem hinter dem Strahlungskörper angeordneten Reflektor und einer den Strahlungskörper zumindest teilweise abdeckenden Scheibe aus strahlungsdurchlässigem Werkstoff.

Es ist ein mehrkanaliges Gasanalysegerät mit zwei Gasküvetten und mit Infrarot-Strahlungsquellen bekannt, bei dem zwischen den Gasküvetten und den Strahlungsquellen eine Zerhackerscheibe angeordnet ist (De-Patentanmeldung P 36 38 787.8). Die Infrarote-Strahlung fällt während des Meßvorgangs durch die Zerhackerscheibe und wird dann über Filterblenden auf Interferenzfilter bzw. auf Referenzfilter geleitet und von dort aus durch die Analysenküvetten auf die Infrarot-Detektoren, die wiederum über Vorverstärker mit einer Mikroprozessor-Elektronik verbunden sind. Es hat sich nun gezeigt, daß bekannte Geräte dieser Art eine deutliche Empfindlichkeit von ihrer jeweiligen Lage aufweisen.

Die Lageabhängigkeit dieser IR-Gasfotometer hängt in erster Lnie von den Eigenschaften der verwendeten IR-Strahlungsquellen ab. Unter Lageabhängigkeit ist in diesem Zusammenhang die Änderung des Nullpunktsignals des Gerätes bei verschiedenen Winkelstellungen des physikalischen Fotometeraufbaus zur Horizontalen zu verstehen. Untersuchungen haben gezeigt, daß diese Lageabhängigkeit von der Wärmekonvektion im Strahlergehäuse abhängt. Durch diese Konvektion wird die Strahlungsemission derartig gestört, daß eine unerwünschte Signaländerung zu beobachten ist.

Der vorliegenden Erfindung liegt nun die Aufgabe zugrunde, eine Infrarot-Strahlungsquelle zu schaffen, die weitgehend lageunabhängig arbeitet, die eine hohe Lebensdauer aufweist und die einfach und preiswert zu fertigen ist.

Diese Aufgabe wird erfindungsgemäß durch ein den Strahlungskörper von seiner Rückseite her teilweise umschließendes Gehäuse gelöst, das von der Scheibe druckfest verschlossen ist und einen in den den Strahlungskörper enthaltenen Raum einmündenden, verschließbaren Kanal aufweist, über den der Raum evakuierbar und/oder mit einem Gas füllbar ist.

Vorzugsweise bildet das mit der Scheibe fest verbundene Gehäuse den Reflektor und weist dabei einen Kanal auf, der einerseits in den Raum zwischen Scheibe und Reflektor einmündet und andererseits mit dem Gehäuse einen Rohrstutzen bildet, wobei sein dem Raum abgekehrtes Ende mit einem Stopfen oder durch Verschweißen, Verkleben oder durch eine Quetschstelle verschließbar ist.

Mit Vorteil ist der Strahlungskörper als Glühwendel ausgebildet, dessen Enden mit stromführenden Leitern verbunden sind, die ihrerseits abgedichtet durch einen Stopfen hindurchgeführt sind, der in eine Öffnung im Gehäuse eingesetzt ist und diese druckfest verschließt. Zur Eingrenzung des Strahlungsspektrums ist der als Wendel ausgeformte Strahlungskörper zumindest teilweise von einem hülsenförmigen Keramikkörper umschlossen.

Zweckmäßigerweise ist die Scheibe aus einem für die infrarote Strahlung durchlässigen Werkstoff, beispielsweise aus Calcium-Fluorit, gebildet und mit ihrem umlaufenden Rand mit dem aus einem metallischen Werkstoff bestehenden Gehäuse oder über einen Zwischenring mit einem Glaslot verbunden.

Gemäß der Erfindung wird im Raum zwischen der Scheibe und dem Reflektor im Bereich von 100 - 200 mbar Absolutdruck eine oxidierende Atmosphäre von beispielsweise $\hat{=}$ 160 mbar $N_2$ + 40 mbar $O_2$ Partialdruck erzeugt, um ein Höchstmaß an Lageunempfindlichkeit bei bester Lebenserwartung für die Strahlungsquelle zu erreichen.

Die Erfindung läßt die verschiedensten Ausführungsmöglichkeiten zu; eine davon ist in der anhängenden Zeichnung schematisch dargestellt, die eine InfrarotStrahlungsquelle im Längsschnitt zeigt.

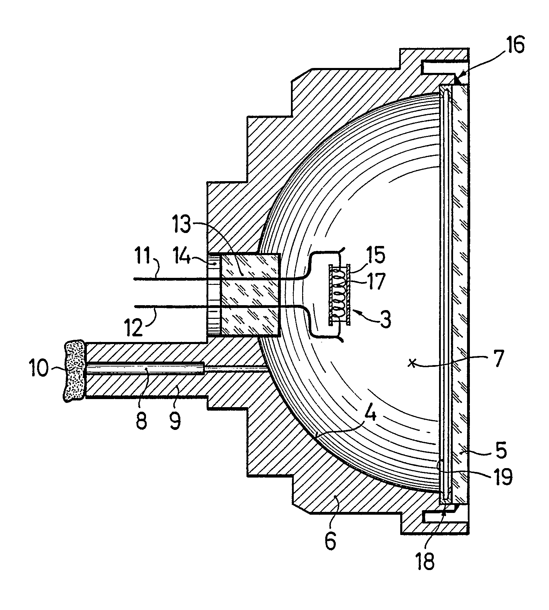

Die in der Zeichnung dargestellte Infrarot-Strahlungsquelle besteht aus einem halbschalenförmigen Gehäuse 6 aus einem metallischen Werkstoff, dessen kalottenförmige Innenfläche den Strahlungsreflektor 4 bildet und eine entsprechend polierte Oberfläche aufweist. Das Gehäuse 6 weist außerdem einen Rohrstutzen 9 auf, der außermittig und auf der dem Reklektor 4 abgewandten Seite des Gehäuses 6 angeordnet ist und einen Kanal 8 aufweist, der einerseits am Reflektor 4 mündet und andererseits durch eine Quetschstelle verschlossen ist. Im Zentrum des kalottenförmigen Reflektors 4 ist eine Öffnung 14 vorgesehen, in die ein Stopfen 13 aus Glas oder Keramik eingesetzt, der die beiden stromführenden Anschlußdrähte oder Leiter 11, 12 aufweist, deren gehäuseseitigen Enden über ein als Glühwendel 17 ausgebildeten Strahlungskörper 3 verbunden sind. Das Glühwendel 17 ist von einem hülsenförmigen Keramikkörper 15 umschlossen, der als Strahlenfilter wirkt. Das Gehäuse weist eine umlaufende, den Reflektor 4 begrenzende Nut 18 auf, in die der Zwischenring 19 eingelegt ist, der beispielsweise aus Silber gefertigt und seinerseits mit der Scheibe 5, beispielsweise über eine Glaslotverbindung, fest verbunden ist, die den Raum 7 für den Strahlungskörper 3 nach außen zu abschließt. Die Scheibe 5 ist aus Calcium-Fluorit gefertigt und ist mit ihrem umlaufenden Rand im Bereich der Nut 18 vom Zwischenring 19 gehalten.

Um die Lageunabhängigkeit der Infrarot-Strahlungsquelle zu verbessern, wird der Raum 7 auf einen Druck bis unterhalb von 400 mbar über den Rohrstutzen 9 abgepumpt, nachdem vorher der Stopfen 13 druckdicht in die Öffnung 14 eingesetzt und die Scheibe 5 mit dem Gehäuse 6 verlötet worden ist. Nach dem Abpumpen des Raums 7 wird dann der Rohrstutzen 9 durch Verquetschen bei 10 verschlossen.

Die Strahlungsemission des Strahlungskörpers 3 wird über den Heizdraht bzw. das Glühwendel 17, das aus einer NiCr-Legierung besteht, erzeugt, wobei für eine lange Lebensdauer des Strahlungskörpers 3 eine oxidierende Atmosphäre ($O_2$) erforderlich ist. Im Bereich von 100 - 200 mbar Absolutdruck lassen sich bei z.B. $\hat{=}$ 160 mbar $N_2$ + 40 mbar $O_2$ Partialdruck die Forderungen nach langer Lebensdauer bei hoher Strahlungsemission und guter Lageunabhängigkeit erfüllen.

## Auflistung der Einzelteile

3 Strahlungskörper
4 Reflektor
5 Scheibe
6 Gehäuse
7 Raum
8 Kanal
9 Rohrstutzen
10 Quetschstelle
11 stromführender Leiter
12 stromführender Leiter
13 Stopfen
14 Öffnung
15 hülsenförmiger Keramikkörper
16 Glaslot
17 Wendel
18 umlaufende Nut
19 Zwischenring

## Ansprüche

1. Infrarot-Strahlungsquelle, insbesondere für ein mehrkanaliges Gasanalysegerät, mit einem Strahlungskörper (3), einem hinter dem Strahlungskörper (3) angeordneten Reflektor (4) und einer den Strahlungskörper (3) zumindest teilweise abdeckenden Scheibe (5) aus strahlungsdurchlässigem Werkstoff, **gekennzeichnet durch** ein den Strahlungskörper (3) von seiner Rückseite her teilweise umschließendes Gehäuse (6), das von der Scheibe (5) druckfest verschlossen ist und einen in den den Strahlungskörper (3) enthaltenden Raum (7) einmündenden, verschließbaren Kanal (8) aufweist, über den der Raum (7) evakuierbar und/oder mit einem Gas füllbar ist.

2. Infrarot-Strahlungsquelle nach Anspruch 1, **dadurch gekennzeichnet,** daß das mit der Scheibe (5) verbundene Gehäuse (6) den Reflektor (4) bildet und einen Kanal (8) aufweist, der einerseits in den Raum (7) zwischen Scheibe (5) und Reflektor (4) einmündet und andererseits mit dem Gehäuse (6) einen Rohrstutzen (9) bildet, und dessen dem Raum (7) abgekehrtes Ende mit einem Stopfen oder durch Verschweißen, Verkleben oder durch eine Quetschstelle (10) verschließbar ist.

3. Infrarot-Strahlungsquelle nach den Ansprüchen 1 und 2, **dadurch gekennzeichnet,** daß der Strahlungskörper (3) als Glühwendel (17) gebildet ist, dessen Enden stromführenden Leitern (11, 12) verbunden sind, die ihrerseits abgedichtet durch einen Stopfen (13) hindurchgeführt sind, der in eine Öffnung (14) im Gehäuse (6) eingesetzt ist und diese druckfest verschließt.

4. Infrarot-Strahlungsquelle nach einem oder mehreren der Ansprüche 1 bis 3, **dadurch gekennzeichnet,** daß der als Wendel (17) ausgeformte Strahlungskörper (3) zumindest teilweise von einem hülsenförmigen Keramikkörper (15) umschlossen ist.

5. Infrarot-Strahlungsquelle nach einem oder mehreren der vorhergehenden Ansprüche, **dadurch gekennzeichnet,** daß die Scheibe (5) aus einem für die infrarote Strahlung durchlässigen Werkstoff, beispielsweise aus Calcium-Fluorit, gebildet ist und mit ihrem umlaufenden Rand mit dem aus einem metallischen Werkstoff bestehenden Gehäuse (6) oder über einen metallischen Zwischenring (19) mit einem Glaslot verbunden ist.

6. Infrarot-Strahlungsquelle nach einem oder mehreren der vorhergehenden Ansprüche, **dadurch gekennzeichnet,** daß im Raum (7) im Bereich von 100 - 200 mbar Absolutdruck eine oxidierende Atmosphäre von beispielsweise $\hat{=}$ 160 mbar $N_2$ + 40 mbar $O_2$ Partialdruck erzeugt wird.